# EUROPEAN PATENT SPECIFICATION

(11) **EP 3 981 591 B1**
(45) Date of publication and mention of the grant of the patent: **05.07.2023**
(21) Application number: 20205791.5
(22) Date of filing: 04.11.2020
(51) Int. Cl.: B32B 17/10

(54) **LIGHT EMITTING GLASS STRUCTURE**
LICHTEMITTIERENDE GLASSTRUKTUR
STRUCTURE DE VERRE ÉLECTROLUMINESCENT

(30) Priority: 12.10.2020 SG 10202010102
(43) Date of publication of application: 13.04.2022
(73) Proprietor: Ming, Huang, Singapore 466718 (SG); Chwee Seng, Philip Kwang, Singapore 788582 (SG)
(72) Inventor: Ming, Huang, Singapore 466718 (SG); Chwee Seng, Philip Kwang, Singapore 788582 (SG)
(74) Representative: Puschmann Borchert Kaiser Klettner Patentanwälte Partnerschaft mbB

(56) References cited:
- WO-A1-2019/103692
- US-A1- 2007 284 992
- US-A1- 2014 048 777

## Description

### TECHNICAL FIELD

This invention relates generally to a light emitting glass structure and a method for forming thereof.

### Background

Building owners, architects and passers-by have always been fascinated not only by facade lighting and the splendor it creates, but have found it useful for conveying message, creating attention and portraying a positive message. There are different ways to illuminate a building, either on opaque or glass surfaces. However, illuminating a glass surface is not as easy as compared to opaque surfaces.

Glass surfaces are typically lighted up with third party light sources either with light emitting diodes (LED) bulbs or lamps from other traditional lighting media. As in most cases, glass and lights operate as two distinct functional elements, each with their own function with high sunken cost. The combination of glass and light into a single media of light emitting glass provides the cost advantage of providing a functional glass material while emitting soft glowing light directly from its surfaces. Therefore, there exists a need for a scalable, easily manufacturable large area forming method for light emitting glass structures.

WO2019103692A1 discloses a light emitting glass structure comprising: a first substrate comprising an electrode layer; a conductive bus structure disposed over the first substrate; an interpose layer formed over the first substrate, the interpose layer comprising a light emitting material; a dielectric layer formed along the light emitting material; and an electrode layer formed over the dielectric layer, the conductive bus structure being spatially displaced from the interpose layer; and a second substrate disposed over the electrode layer. US2007284992A1 discloses another light emitting structure comprising: a first substrate comprising an electrode layer; an interpose layer formed over the first substrate, the interpose layer comprising a luminescent layer; a dielectric layer formed along the luminescent layer; a rear electrode layer formed over the dielectric layer; and a second substrate disposed over the electrode layer. Contact busbars are spatially displaced from the interpose layer. A resin contact layer extends over the interpose layer.

### Summary

In accordance with a first aspect of the invention, there is disclosed a light emitting glass structure comprising a first substrate, the first substrate being a conductive substrate, a first contact strip disposed over the first substrate, a first conductive adhesive layer inter-coupling and electrically communicating the first contact strip with the first substrate, an interpose layer formed over the first substrate. The interpose layer comprises a light emitting material, a dielectric layer formed along the light emitting material and an electrode layer formed over the dielectric layer, the first contact strip being spatially displaced from the interpose layer. The light emitting glass structure further comprises a second contact strip disposed over the interpose layer, a second conductive adhesive layer inter-coupling and electrically communicating the second contact strip with the interpose layer, a resin layer extending over the interpose layer with the second contact strip interposing the interpose layer and the resin layer and a second substrate disposed over the resin layer with the resin layer interposing the first substrate and the second substrate.

In accordance with a second aspect of the invention, there is disclosed a light emitting glass structure forming method comprising forming an interpose layer over a first substrate, the first substrate being a conductive substrate and the interpose layer comprising a light emitting material, a dielectric layer formed along the light emitting material and an electrode layer formed over the dielectric layer, the first contact strip being spatially displaced from the interpose layer. The light emitting glass structure forming method further comprising bonding a first contact strip to the first substrate, the first contact strip being coupled and electrically communicated to the first substrate by a first conductive adhesive layer, the first contact strip being spatially displaced from the interpose layer, bonding a second contact strip to the interpose layer, the second contact strip being coupled and electrically communicated to the interpose layer by a second conductive adhesive layer, disposing a second substrate over the interpose layer and the second contact strip, and forming a resin layer over the second contact strip to thereby dispose the resin layer between the interpose layer and the second substrate.

### Brief Description of the Drawings

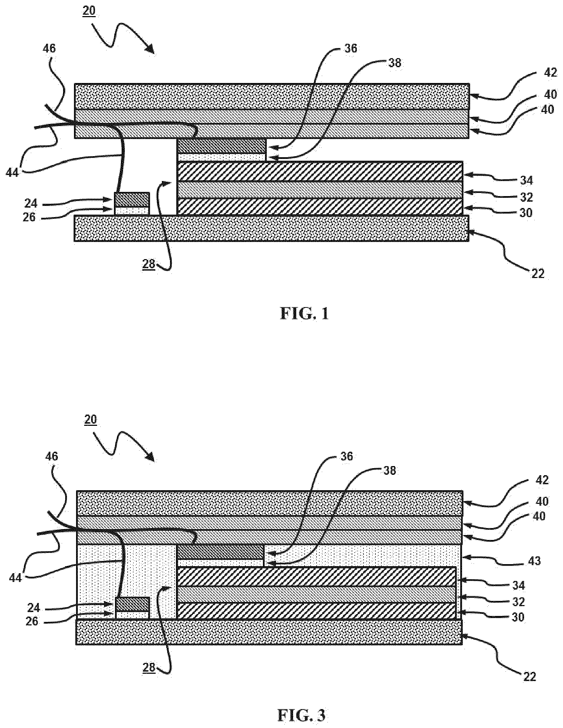

FIG. 1 shows an exemplary partial sectional view of a light emitting glass structure in accordance with one aspect of the invention where an interpose layer being formed on a first substrate, a first contact strip being bonded by a first conductive adhesive layer to the first substrate and a second contact strip being bonded onto the interpose layer with a second conductive adhesive layer;

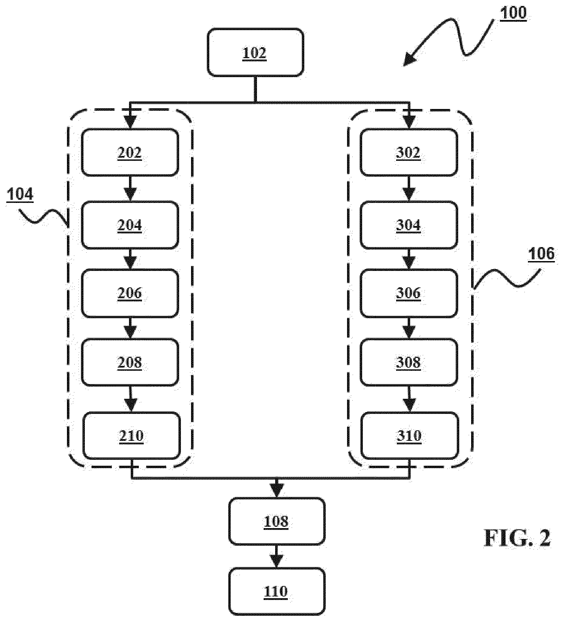

FIG. 2 shows an exemplary process flow diagram of a light emitting glass structure forming method for forming at least a portion of the light emitting glass structure of FIG. 1 in accordance with another aspect of the invention; and
FIG. 3 shows an exemplary partial sectional view of the light emitting glass structure of FIG. 1 with the interpose layer being encapsulated by anisotropic conductive adhesive (ACA) and the first conductive adhesive layer and the second conductive adhesive layer forming a portion of and constituting the ACA.

### Detailed Description

An exemplary embodiment of the present invention, a light emitting glass structure 20 and a light emitting glass structure forming method 100 is described hereinafter with reference to FIG. 1 to FIG. 3.

The light emitting glass structure 20 comprises a first substrate 22. Specifically, the first substrate 22 is a conductive substrate. The light emitting structure 20 further comprises a first contact strip 24 disposed over the first substrate 22, a first conductive adhesive layer 26 inter-coupling and electrically communicating the first contact strip 24 with the first substrate 22, and an interpose layer 28 formed over the first substrate 22. The interpose layer 28 comprises a light emitting material 30, a dielectric layer 32 formed along the light emitting material 32 and an electrode layer 34 formed over the dielectric layer 32. The first contact strip 24 is spatially displaced from the interpose layer 28. Preferably, each of the electrode layer 34, the light emitting material 30 and the dielectric layer 32 is formed by one of jet spray printing and screen printing. The interpose layer 28 can be formed with various shapes and patterns. Hence, in this manner, the light emitting glass structure 20 is provided for use in displays, advertising, or other visual display applications.

The light emitting glass structure 20 further comprises a second contact strip 36 disposed over the interpose layer 28, a second conductive adhesive layer 38 inter-coupling and electrically communicating the second contact strip 36 with the interpose layer 28, a resin layer 40 extending over the interpose layer 28 with the second contact strip 36 interposing the interpose layer 28 and the resin layer 40, and a second substrate 42 disposed over the resin layer 40 with the resin layer 40 interposing the first substrate 22 and the second substrate 42.

Preferably, the first substrate 22 is a conductive glass substrate, the second substrate 42 being a glass substrate, and the resin layer 40 is a polyvinyl butyral (PVB) layer. Each of the first substrate 22 and the second substrate 42 is a rigid structure that is either optically transparent or opaque. Preferably, each of the first contact strip 24 and the second contact strip 36 is one of a copper sheet and a copper plate structure. For example, a patterned portion of a copper sheet or a copper plate can be cut to form the first contact strip 24 and the second contact strip 36. Hence, each of the first contact strip 24 and the second contact strip 36 can be a malleable strip of copper of a required shape and dimension or a flexible sheet of copper.

Preferably, the electrode layer 34 is formed from conductive oxides, such as at least one of conductive zinc oxide, indium tin oxide and silver paste, and each of the first conductive adhesive layer 26 and the second conductive adhesive layer 38 is a silver filled polymer, for example, silver filled AVA polymer. Each of the first conductive adhesive layer 26 and the second conductive adhesive layer 38 may be an anisotropic conductive adhesive (ACA) 43 typically made by filling relatively conventional epoxy insulating adhesives with conductive particles, which are either pure metal or metal-coated polymer. The conductive particles can form a connection when they're trapped between electrodes, while the adhesive ensures that each connection is electrically isolated.

The electrode layer 34 may be formed or provided as a meshed-patterned electrode to reduce cost and integration of the light emitting material 30 and the dielectric layer 32 therewith for increased usability. The interpose layer 28 may be encapsulated during the manufacturing thereof. Advantageously, the interpose layer 28 may be encapsulated with one of PVB or conductive adhesive such as the ACA 43 so that the printed light emitting glass structure 20 has increased lifetime and mechanical robustness. When encapsulated with the ACA 43, the first conductive adhesive layer 26 and the second conductive adhesive layer 38 form part of and constitutes the ACA 43.

One of the light emitting material 30 and dielectric layer 32 is formed on the first substrate 22 and interposing the first substrate 22 and the other thereof. The dielectric layer 32 is formed from ceramic paste and the light emitting material 30 is phosphor paste. Preferably, the dielectric layer 32 is formed from ceramic paste or barium titanate composite, and the light emitting material 30 is formed from phosphor paste or doped zinc sulfide.

Preferably, the light emitting glass structure 20 further comprises a first connection line 44 embedded in the resin layer 40 with one end thereof extending out of the resin layer 40 adjacent the first contact strip 24 for electrically coupling with the first contact strip 24 and the other end thereof extendable from an edge of the resin layer 40. The one end of the first connection line 44 can be bonded directly to the first contact strip 24 or to the first conductive adhesive layer 26. The light emitting glass structure 20 further comprises a second connection line 46 embedded in the resin layer 40 with one end thereof extending out of the resin layer 40 adjacent the second contact strip 36 for electrically coupling with the second contact strip 36 and the other end thereof extendable from an edge of the resin layer 40. The one end of the second connection line 46 can be bonded directly to the second contact strip 36 or to the second conductive adhesive layer 38.The resin layer 40 can be formed as one or multiple layers with the first connection line 44 and the second connection line 46, or a portion of each thereof, being embedded therein during forming of the resin layer 40 or sandwiched between two layers of the resin layer 40. In an implementation of the light emitting glass structure forming method 100 and the light emitting glass structure, one or both of the first connection line 44 and the second connection line 46 can be bonded directly to, respectively, the first contact strip 24 and the second contact strip 36 prior to the first contact strip 24 and the second contact strip 36 being bonded to the first substrate 22 and the interpose layer 28 respectively. The first connection line 44 and the second connection line 46 is specifically wherethrough power, or electrical energy, is supplied to the interpose layer 28.

The light emitting glass structure forming method 100 comprises a step 102 of forming the interpose layer 28 over the first substrate 22, a step 104 of bonding the first contact strip 24 to the first substrate 22, and a step 106 of bonding the second contact strip 36 to the interpose layer 28. The light emitting glass structure forming method 100 further comprises a step 108 of disposing a second substrate 42 over the interpose layer 28 and the second contact strip 36, and a step 110 of forming the resin layer 40 over the second contact strip 36 to thereby dispose the resin layer 40 between the interpose layer 28 and the second substrate 42.

The step 104 of bonding the first contact strip 24 to the first substrate 22 comprises a step 202 of coating the first contact strip 24 with the first conductive adhesive layer 26, a step 204 of disposing the first contact strip 24 on the first substrate 22 to position the first conductive adhesive layer 26 between the first contact strip 24 and the first substrate 22, a step 206 of taping the first contact strip 24 to the first substrate 22 with a first high temperature adhesive tape, a step 208 of baking the first substrate 22 and the first contact strip 24 to cure the first conductive adhesive layer 26, and a step 210 of removing the first high temperature adhesive tape to reveal the first contact strip 24 being bonded to the first substrate 22 by the first conductive adhesive layer 26.

The step 106 of bonding the first contact strip 24 to the first substrate 22 comprises a step 302 of coating the second contact strip 36 with the second conductive adhesive layer 38, a step 304 of disposing the second contact strip 36 on the interpose layer 28 to position the second conductive adhesive layer 38 between the second contact strip 36 and the interpose layer 28, a step 306 of taping the second contact strip 36 to the interpose layer 28 with a second high temperature adhesive tape, a step 308 of baking the first substrate 22 and the second contact strip 36 to cure the second conductive adhesive layer 38, and a step 310 of removing the second high temperature adhesive tape to thereby reveal the second contact strip 36 being bonded to the interpose layer 28 by the second conductive adhesive layer 38.

The step 104 of bonding the first contact strip 24 to the first substrate 22 and the step 106 of bonding the first contact strip 24 to the first substrate 22 may be performed in no particular order to one another but are preferably executed in tandem of one another.

In an example of implementation of the light emitting glass structure forming method 100, operating temperatures of substantially between 20 °C to 30 °C and operating humidity of substantially between 39% to 76% are preferred. Prior to the utilization of any of the first substrate 22 and the second substrate 42, each of the first substrate 22 and the second substrate 42 needs to be prepared by first being cut into the required size, being heated in an oven at 140°C for 1 hour and then being cooled, preferably in the same oven, until the temperature of the oven reaches 60°C. Further, the first substrate 22 may be surface treated or coated to enable the first substrate 22 to be electrically conductive.

The electrode layer 34 may be formed by screen printing silver paste at 40mm/s to 70mm/s at a pressure of 0.24MPa before being cured in an oven for 130°C for 20mins and subsequently inspected for broken traces, unintended voids and that a thickness of 6-8µm for the electrode layer 34 has been achieved.

For the dielectric layer 32, dielectric material is preferably screen printed at 40mm/s to 70mm/s at a pressure of 0.24MPa before being cured in an oven for 130°C for 20mins and subsequently inspected for unintended voids and that a thickness of 20µm for the dielectric layer 32 has been achieved. For the light emitting material 30, dielectric material is preferably screen printed at 40mm/s to 70mm/s at a pressure of 0.24MPa before being cured in an oven for 130°C for 20mins and subsequently inspected for unintended voids and that a thickness of 30µm for the light emitting material 30 has been achieved. Inspection for voids and broken traces are preferably performed using one or both of a light box and an optical microscope.

Embodiments of the present printed light emitting glass structure 20 can provide large area lighting, large area signage, or large area display, under both indoor and outdoor conditions. While several exemplary embodiments have been presented in the foregoing detailed description of the invention, it should be appreciated that a vast number of variations exist.

Aspects of particular embodiments of the present disclosure address at least one aspect, problem, limitation, and/or disadvantage associated with light emitting glass structures and a method for forming thereof. While features, aspects, and/or advantages associated with certain embodiments have been described in the disclosure, other embodiments may also exhibit such features, aspects, and/or advantages, and not all embodiments need necessarily exhibit such features, aspects, and/or advantages to fall within the scope of the disclosure. It will be appreciated by a person of ordinary skill in the art that several of the above-disclosed structures, components, or alternatives thereof, can be desirably combined into alternative structures, components, and/or applications. In addition, various modifications, alterations, and/or improvements may be made to various embodiments that are disclosed by a person of ordinary skill in the art within the scope of the present disclosure, which is limited only by the following claims.

## Claims

1. A light emitting glass structure comprising:
a first substrate, the first substrate being a conductive substrate;
a first contact strip disposed over the first substrate;
a first conductive adhesive layer inter-coupling and electrically communicating the first contact strip with the first substrate;
an interpose layer formed over the first substrate, the interpose layer comprising:
a light emitting material;
a dielectric layer formed along the light emitting material; and
an electrode layer formed over the dielectric layer, the first contact strip being spatially displaced from the interpose layer,
a second contact strip disposed over the interpose layer;
a second conductive adhesive layer inter-coupling and electrically communicating the second contact strip with the interpose layer;
a resin layer extending over the interpose layer with the second contact strip interposing the interpose layer and the resin layer; and
a second substrate disposed over the resin layer with the resin layer interposing the first substrate and the second substrate.

2. The light emitting glass structure as in claim 1, the first substrate being a conductive glass substrate and the second substrate being a glass substrate.

3. The light emitting glass structure as in claim 1, the resin layer being a polyvinyl butyral (PVB) layer.

4. The light emitting glass structure as in claim 1, each of the first contact strip and the second contact strip being one of a copper sheet and a copper plate structure.

5. The light emitting glass structure as in claim 1, the electrode layer being formed from at least one of conductive zinc oxide, indium tin oxide and silver paste, and each of the first conductive adhesive layer and the second conductive adhesive layer being a silver filled polymer.

6. The light emitting glass structure as in claim 1, one of the light emitting material and dielectric layer being formed on the first substrate and interposing the first substrate and the other thereof.

7. The light emitting glass structure as in claim 1, the dielectric layer being formed from ceramic paste and the light emitting material being phosphor paste.

8. The light emitting glass structure as in claim 1, further comprising:
a first connection line embedded in the resin layer with one end thereof extending out of the resin layer adjacent the first contact strip for electrically coupling with the first contact strip and the other end thereof extendable from an edge of the resin layer; and
a second connection line embedded in the resin layer with one end thereof extending out of the resin layer adjacent the second contact strip for electrically coupling with the second contact strip and the other end thereof extendable from an edge of the resin layer.

9. A light emitting glass structure forming method comprising:
forming an interpose layer over a first substrate, the first substrate being a conductive substrate and the interpose layer comprising:
a light emitting material;
a dielectric layer formed along the light emitting material; and
an electrode layer formed over the dielectric layer, the first contact strip being spatially displaced from the interpose layer,
bonding a first contact strip to the first substrate, the first contact strip being coupled and electrically communicated to the first substrate by a first conductive adhesive layer, the first contact strip being spatially displaced from the interpose layer;
bonding a second contact strip to the interpose layer, the second contact strip being coupled and electrically communicated to the interpose layer by a second conductive adhesive layer,
disposing a second substrate over the interpose layer and the second contact strip; and
forming a resin layer over the second contact strip to thereby dispose the resin layer between the interpose layer and the second substrate.

10. The light emitting structure forming method as in claim 9, bonding the first contact strip to the first substrate comprising:
coating the first contact strip with the first conductive adhesive layer,
disposing the first contact strip on the first substrate to position the first conductive adhesive layer between the first contact strip and the first substrate;
taping the first contact strip to the first substrate with a first high temperature adhesive tape;
baking the first substrate and the first contact strip to cure the first conductive adhesive layer; and
removing the first high temperature adhesive tape.

11. The light emitting structure forming method as in claim 10, bonding the second contact strip to the interpose layer comprising:
coating the second contact strip with the second conductive adhesive layer,
disposing the second contact strip on the interpose layer to position the second conductive adhesive layer between the second contact strip and the interpose layer;
taping the second contact strip to the interpose layer with a second high temperature adhesive tape;
baking the first substrate and the second contact strip to cure the second conductive adhesive layer; and
removing the second high temperature adhesive tape.

12. The light emitting structure forming method as in claim 11, the first substrate being baked substantially at 150°C for 30 minutes to cure at least one of the first conductive adhesive layer and the second conductive adhesive layer.

13. The light emitting structure forming method as in claim 9, the resin layer being a polyvinyl butyral (PVB) layer, and each of the first contact strip and the second contact strip being one of a copper sheet and a copper plate structure,
wherein the dielectric layer is formed from ceramic paste and the light emitting material is formed from phosphor paste.

14. The light emitting structure forming method as in claim 9, the electrode layer being formed from at least one of conductive zinc oxide, indium tin oxide and silver paste, and each of the first conductive adhesive layer and the second conductive adhesive layer being a silver filled polymer, the first substrate being a conductive glass substrate and the second substrate being a glass substrate.

15. The light emitting structure forming method as in claim 9, further comprising:
embedding a first connection line in the resin layer with one end thereof extending out of the resin layer adjacent the first contact strip for electrically coupling with the first contact strip and the other end thereof extendable from an edge of the resin layer; and
embedding a second connection line in the resin layer with one end thereof extending out of the resin layer adjacent the second contact strip for electrically coupling with the second contact strip and the other end thereof extendable from an edge of the resin layer.

## Patentansprüche

1. Lichtemittierende Glasstruktur, umfassend:
ein erstes Substrat, bei dem es sich um ein leitfähiges Substrat handelt;
einen ersten Kontaktstreifen, der über dem ersten Substrat angeordnet ist;
eine erste leitfähige Klebeschicht, die den ersten Kontaktstreifen mit dem ersten Substrat koppelt und ihn elektrisch mit dem ersten Substrat verbindet;
eine Zwischenschicht, die über dem ersten Substrat ausgebildet ist, wobei die Zwischenschicht Folgendes umfasst:
ein lichtemittierendes Material;
eine dielektrische Schicht, die entlang des lichtemittierenden Materials ausgebildet ist; und
eine Elektrodenschicht, die über der dielektrischen Schicht ausgebildet ist, wobei der
erste Kontaktstreifen gegenüber der Zwischenschicht räumlich versetzt ist,
einen zweiten Kontaktstreifen, der über der Zwischenschicht angeordnet ist;
eine zweite leitfähige Klebeschicht, die den zweiten Kontaktstreifen mit der Zwischenschicht koppelt und ihn elektrisch mit der Zwischenschicht verbindet;
eine Harzschicht, die sich über die Zwischenschicht erstreckt, wobei der zweite Kontaktstreifen zwischen der Zwischenschicht und der Harzschicht liegt; und
ein zweites Substrat, das über der Harzschicht angeordnet ist, wobei die Harzschicht zwischen dem ersten Substrat und dem zweiten Substrat liegt.

2. Lichtemittierende Glasstruktur nach Anspruch 1, bei der das erste Substrat ein leitfähiges Glassubstrat ist und das zweite Substrat ein Glassubstrat ist.

3. Lichtemittierende Glasstruktur nach Anspruch 1, bei der die Harzschicht eine Polyvinylbutyral-(PVB-) Schicht ist.

4. Lichtemittierende Glasstruktur nach Anspruch 1, bei der sowohl der erste Kontaktstreifen als auch der zweite Kontaktstreifen jeweils aus einer Kupferblech- bzw. einer Kupferplattenstruktur besteht.

5. Lichtemittierende Glasstruktur nach Anspruch 1, bei der die Elektrodenschicht aus mindestens einer der Komponenten leitfähiges Zinkoxid, Indiumzinnoxid und Silberpaste gebildet ist, und jede der ersten leitfähigen Klebstoffschicht und der zweiten leitfähigen Klebstoffschicht aus einem mit Silber gefülltem Polymer besteht.

6. Lichtemittierende Glasstruktur nach Anspruch 1, bei der entweder das lichtemittierende Material oder die dielektrische Schicht auf dem ersten Substrat ausgebildet ist und dabei zwischen dem ersten Substrat und der jeweils anderen Komponente liegt.

7. Lichtemittierende Glasstruktur nach Anspruch 1, bei der die dielektrische Schicht aus Keramikpaste besteht und das lichtemittierende Material aus Leuchtstoffpaste besteht.

8. Lichtemittierende Glasstruktur nach Anspruch 1, des Weiteren umfassend:
eine erste Verbindungsleitung, die in die Harzschicht eingebettet ist und deren eines Ende in der Nähe des ersten Kontaktstreifens zur elektrischen Kopplung mit dem ersten Kontaktstreifen aus der Harzschicht heraus verläuft und deren anderes Ende aus einem Rand der Harzschicht herausragen kann; und
eine zweite Verbindungsleitung, die in die Harzschicht eingebettet ist und deren eines Ende in der Nähe des zweiten Kontaktstreifens zur elektrischen Kopplung mit dem zweiten Kontaktstreifen aus der Harzschicht heraus verläuft und deren anderes Ende aus einem Rand der Harzschicht herausragen kann.

9. Verfahren zur Bildung einer lichtemittierenden Glasstruktur, umfassend:
Ausbilden einer Zwischenschicht über einem ersten Substrat, wobei das erste Substrat ein leitfähiges Substrat ist, und die Zwischenschicht umfasst:
ein lichtemittierendes Material;
eine dielektrische Schicht, die entlang des lichtemittierenden Materials ausgebildet ist; und
einen Streifen, der gegenüber der Zwischenschicht räumlich versetzt ist,
Verbinden eines ersten Kontaktstreifens mit dem ersten Substrat, wobei der erste Kontaktstreifen über eine erste leitfähige Klebstoffschicht mit dem ersten Substrat gekoppelt und elektrisch mit dem ersten Substrat verbunden ist, wobei der erste Kontaktstreifen gegenüber der Zwischenschicht räumlich versetzt ist;
Verbinden eines zweiten Kontaktstreifens mit der Zwischenschicht, wobei der zweite Kontaktstreifen über eine zweite leitfähige Klebstoffschicht mit der Zwischenschicht gekoppelt und
elektrisch mit der Zwischenschicht verbunden ist,
Anordnen eines zweiten Substrats über der Zwischenschicht und dem zweiten Kontaktstreifen; und
Bilden einer Harzschicht über dem zweiten Kontaktstreifen, um dadurch die Harzschicht zwischen der Zwischenschicht und dem zweiten Substrat anzuordnen.

10. Verfahren zur Bildung einer lichtemittierenden Struktur nach Anspruch 9, bei dem der erste Kontaktstreifen mit dem ersten Substrat verbunden wird, umfassend:
Beschichten des ersten Kontaktstreifens mit der ersten leitfähigen Klebstoffschicht;
Anordnen des ersten Kontaktstreifens auf dem ersten Substrat, um die erste leitfähige Klebstoffschicht zwischen dem ersten Kontaktstreifen und dem ersten Substrat zu positionieren;
Aufkleben des ersten Kontaktstreifens auf das erste Substrat unter Verwendung eines ersten Hochtemperatur-Klebebands;
Einbrennen des ersten Substrats und des ersten Kontaktstreifens zur Aushärtung der ersten leitfähigen Klebstoffschicht; und
Entfernen des ersten Hochtemperatur-Klebebandes.

11. Verfahren zur Bildung einer lichtemittierenden Struktur nach Anspruch 10, bei dem der zweite Kontaktstreifen mit der Zwischenschicht verbunden wird, umfassend:
Beschichten des zweiten Kontaktstreifens mit der zweiten leitfähigen Klebstoffschicht;
Anordnen des zweiten Kontaktstreifens auf der Zwischenschicht, um die zweite leitfähige Klebstoffschicht zwischen dem zweiten Kontaktstreifen und der Zwischenschicht zu positionieren;
Aufkleben des zweiten Kontaktstreifens auf die Zwischenschicht unter Verwendung eines zweiten Hochtemperatur-Klebebands;
Einbrennen des ersten Substrats und des zweiten Kontaktstreifens zur Aushärtung der zweiten leitfähigen Klebstoffschicht; und
Entfernen des zweiten Hochtemperatur-Klebebandes.

12. Verfahren zur Herstellung einer lichtemittierenden Struktur nach Anspruch 11, bei dem das Einbrennen des ersten Substrats im Wesentlichen bei 150°C für 30 Minuten erfolgt, um mindestens eine der ersten leitfähigen Klebstoffschicht und der zweiten leitfähigen Klebstoffschicht auszuhärten.

13. Verfahren zur Herstellung einer lichtemittierenden Struktur nach Anspruch 9, bei dem die Harzschicht eine Polyvinylbutyral- (PVB-) Schicht ist, und sowohl der erste Kontaktstreifen als auch der zweite Kontaktstreifen jeweils aus einer Kupferblech- bzw. einer Kupferplattenstruktur besteht,
wobei die dielektrische Schicht aus Keramikpaste und das lichtemittierende Material aus Leuchtstoffpaste gebildet ist.

14. Verfahren zur Bildung einer lichtemittierenden Struktur nach Anspruch 9, bei dem die Elektrodenschicht aus mindestens einer der Komponenten leitfähiges Zinkoxid, Indiumzinnoxid und Silberpaste gebildet ist und sowohl die erste leitfähige Klebstoffschicht als auch die zweite leitfähige Klebstoffschicht ein mit Silber gefülltes Polymer ist, wobei das erste Substrat ein leitfähiges Glassubstrat ist und das zweite Substrat ein Glassubstrat ist.

15. Verfahren zur Bildung einer lichtemittierenden Struktur nach Anspruch 9, des Weiteren umfassend:
Einbetten einer ersten Verbindungsleitung in die Harzschicht, deren eines Ende in der Nähe des ersten Kontaktstreifens zur elektrischen Kopplung mit dem ersten Kontaktstreifen aus der Harzschicht heraus verläuft und deren anderes Ende aus einem Rand der Harzschicht herausragen kann; und
Einbetten einer zweiten Verbindungsleitung in die Harzschicht, deren eines Ende in der Nähe des zweiten Kontaktstreifens zur elektrischen Kopplung mit dem zweiten Kontaktstreifen aus der Harzschicht heraus verläuft und deren anderes Ende aus einem Rand der Harzschicht herausragen kann.

## Revendications

1. Structure luminescente en verre comprenant:
un premier substrat, le premier substrat étant un substrat conducteur;
une première bande de contact disposée au-dessus du premier substrat;
une première couche adhésive conductrice couplant mutuellement et faisant communiquer électriquement la première bande de contact avec le premier substrat;
une couche d'interposition formée au-dessus du premier substrat, la couche d'interposition comprenant:
un matériau luminescent;
une couche diélectrique formée le long du matériau luminescent; et
une couche d'électrode formée au-dessus de la couche diélectrique, la première bande de contact étant spatialement déplacée de la couche d'interposition,
une deuxième bande de contact disposée au-dessus de la couche d'interposition;
une deuxième couche adhésive conductrice couplant mutuellement et faisant communiquer électriquement la deuxième bande de contact avec la couche d'interposition;
une couche de résine s'étendant au-dessus de la couche d'interposition avec la deuxième bande de contact qui s'interpose entre la couche d'interposition et la couche de résine; et
un deuxième substrat disposé au-dessus de la couche de résine avec la couche de résine qui s'interpose entre le premier substrat et le deuxième substrat.

2. Structure luminescente en verre selon la revendication 1, dans laquelle le premier substrat est un substrat en verre conducteur et le deuxième substrat est un substrat en verre.

3. Structure luminescente en verre selon la revendication 1, dans laquelle la couche de résine est une couche de poly(butyral de vinyle) (PVB).

4. Structure luminescente en verre selon la revendication 1, dans laquelle chacune parmi la première bande de contact et la deuxième bande de contact est l'une parmi une tôle de cuivre et une structure en plaque de cuivre.

5. Structure luminescente en verre selon la revendication 1, dans laquelle la couche d'électrode est formée à partir d'au moins l'un parmi un oxyde de zinc conducteur, un oxyde d'indium et d'étain, et une pâte d'argent, et chacune parmi la première couche adhésive conductrice et la deuxième couche adhésive conductrice est un polymère chargé d'argent.

6. Structure luminescente en verre selon la revendication 1, dans laquelle l'un parmi le matériau luminescent et la couche diélectrique est formé sur le premier substrat et s'interpose entre le premier substrat et l'autre parmi ceux-ci.

7. Structure luminescente en verre selon la revendication 1, dans laquelle la couche diélectrique est formée à partir d'une pâte céramique et le matériau luminescent est une pâte de phosphore.

8. Structure luminescente en verre selon la revendication 1, comprenant en outre:
une première ligne de connexion noyée dans la couche de résine avec une extrémité de celle-ci qui s'étend hors de la couche de résine au voisinage de la première bande de contact pour un couplage électrique avec la première bande de contact et l'autre extrémité de celle-ci qui peut s'étendre à partir d'un bord de la couche de résine; et
une deuxième ligne de connexion noyée dans la couche de résine avec une extrémité de celle-ci qui s'étend hors de la couche de résine au voisinage de la deuxième bande de contact pour un couplage électrique avec la deuxième bande de contact et l'autre extrémité de celle-ci qui peut s'étendre à partir d'un bord de la couche de résine.

9. Procédé de formation de structure luminescente en verre, comprenant:
la formation d'une couche d'interposition au-dessus d'un premier substrat, le premier substrat étant un substrat conducteur, et la couche d'interposition comprenant:
un matériau luminescent;
une couche diélectrique formée le long du matériau luminescent; et
une couche d'électrode formée au-dessus de la couche diélectrique, la première bande de contact étant spatialement déplacée de la couche d'interposition,
le collage d'une première bande de contact au premier substrat, la première bande de contact étant couplée au et en communication électrique avec le premier substrat par une première couche adhésive conductrice, la première bande de contact étant spatialement déplacée de la couche d'interposition;
le collage d'une deuxième bande de contact à la couche d'interposition, la deuxième bande de contact étant couplée à et en communication électrique avec la couche d'interposition par une deuxième couche adhésive conductrice,
la disposition d'un deuxième substrat au-dessus de la couche d'interposition et de la deuxième bande de contact; et
la formation d'une couche de résine au-dessus de la deuxième bande de contact pour disposer ainsi la couche de résine entre la couche d'interposition et le deuxième substrat.

10. Procédé de formation de structure luminescente selon la revendication 9, dans lequel le collage de la première bande de contact au premier substrat comprend:
le revêtement de la première bande de contact avec la première couche adhésive conductrice,
la disposition de la première bande de contact sur le premier substrat pour que la première couche adhésive conductrice soit positionnée entre la première bande de contact et le premier substrat;
le marouflage de la première bande de contact au premier substrat avec un premier ruban adhésif à température élevée;
la cuisson du premier substrat et de la première bande de contact pour durcir la première couche adhésive conductrice; et
le retrait du premier ruban adhésif à température élevée.

11. Procédé de formation de structure luminescente selon la revendication 10, dans lequel le collage de la deuxième bande de contact à la couche d'interposition comprend:
le revêtement de la deuxième bande de contact avec la deuxième couche adhésive conductrice,
la disposition de la deuxième bande de contact sur la couche d'interposition pour que la deuxième couche adhésive conductrice soit positionnée entre la deuxième bande de contact et la couche d'interposition;
le marouflage de la deuxième bande de contact à la couche d'interposition avec un deuxième ruban adhésif à température élevée;
la cuisson du premier substrat et de la deuxième bande de contact pour durcir la deuxième couche adhésive conductrice; et
le retrait du deuxième ruban adhésif à température élevée.

12. Procédé de formation de structure luminescente selon la revendication 11, dans lequel le premier substrat est cuit sensiblement à 150°C pendant 30 minutes pour que soit cuite au moins l'une parmi la première couche adhésive conductrice et la deuxième couche adhésive conductrice.

13. Procédé de formation de structure luminescente selon la revendication 9, dans lequel la couche de résine est une couche de poly(butyral de vinyle), et chacune parmi la première bande de contact et la deuxième bande de contact est l'une parmi une tôle de cuivre et une structure en plaque de cuivre,
dans lequel la couche diélectrique est formée à partir d'une pâte céramique et le matériau luminescent est formé à partir d'une pâte de phosphore.

14. Procédé de formation de structure luminescente selon la revendication 9, dans lequel la couche diélectrique est formée à partir d'au moins l'un parmi un oxyde de zinc conducteur, un oxyde d'indium et d'étain, et une pâte d'argent, et chacune parmi la première couche adhésive conductrice et la deuxième couche adhésive conductrice est un polymère chargé d'argent, le premier substrat est un substrat conducteur en verre, et le deuxième substrat est un substrat en verre.

15. Procédé de formation de structure luminescente selon la revendication 9, comprenant en outre:
le noyage d'une première ligne de connexion dans la couche de résine avec une extrémité de celle-ci qui s'étend hors de la couche de résine au voisinage de la première bande de contact pour un couplage électrique avec la première bande de contact et l'autre extrémité de celle-ci qui peut s'étendre à partir d'un bord de la couche de résine; et
le noyage d'une deuxième ligne de connexion dans la couche de résine avec une extrémité de celle-ci qui s'étend hors de la couche de résine au voisinage de la deuxième bande de contact pour un couplage électrique avec la deuxième bande de contact et l'autre extrémité de celle-ci qui peut s'étendre à partir d'un bord de la couche de résine.
